# FASCICULE DE BREVET EUROPEEN

(11) **EP 2 898 802 B1**
(45) Date de publication et mention de la délivrance du brevet: **19.09.2018**
(21) Numéro de dépôt: 15151846.1
(22) Date de dépôt: 20.01.2015
(51) Int. Cl.: A47J 31/44

(54) **Dispositif de moussage d'une machine pour la préparation de boissons**
Aufschäumvorrichtung einer Maschine zur Zubereitung von Getränken
Foaming device of a machine for preparing beverages

(30) Priorité: 27.01.2014 FR 1450663
(43) Date de publication de la demande: 29.07.2015
(73) Titulaire: SEB S.A., 69130 Ecully (FR)
(72) Inventeur: Hiron, Frédéric, 72130 Saint Ouen de Mimbre (FR); Bordelet, Marylène, 72240 Neuvillalais (FR); Avoie, Fabrice, 49070 Beaucouze (FR)
(74) Mandataire: Bourrières, Patrice

(56) Documents cités:
- EP-A1- 2 606 783
- DE-A1- 3 942 713
- US-A- 5 769 135

## Description

La présente invention est relative au domaine des machines pour la préparation de boissons équipées d'un dispositif de moussage, et concerne tout particulièrement le dispositif de moussage. Un tel dispositif de moussage a pour objet de faire mousser un liquide en le mélangeant à de l'air et de la vapeur. Une application particulière concerne un dispositif de moussage de lait d'une machine à café équipée d'un générateur de vapeur.
Un tel dispositif de moussage d'une machine pour la préparation de boissons est connu notamment des documents antérieurs EP 0727168 A1, CN 201920509 U et US5769135. Ces dispositifs de moussage antérieurs comprennent un tube externe, un tube de distribution de vapeur et une buse. Le tube de distribution de vapeur comprend une partie aval insérée au moins partiellement dans la partie amont du tube externe. D'une part, la buse comprend un corps configuré pour être inséré au moins partiellement dans la partie inférieure du tube externe, lesdits éléments étant configurés pour être emboîtés l'un dans l'autre. D'autre part, la buse comprend une tête munie d'une chambre de diffusion qui communique avec le corps tubulaire et débouche en sortie de ladite tête. Ces dispositifs de moussage comprennent également des moyens de vissage qui sont agencés entre la partie aval du tube de distribution de vapeur et le corps tubulaire de la buse. Ces moyens de vissage sont configurés pour assembler la buse avec le tube de distribution. En outre, ces dispositifs de moussage comprennent des moyens d'aspiration qui sont configurés pour aspirer dans la chambre de diffusion, par effet venturi, de l'air provenant de l'intérieur du tube externe et un liquide provenant d'un récipient, lors d'une injection de vapeur dans la buse et lorsque l'extrémité du tube externe est plongée dans ce liquide.

La configuration des éléments de ces dispositifs de moussage antérieurs, assemblés entre eux, permet à la partie amont du tube externe d'être en contact avec l'air ambiant, ce qui permet la pénétration de cet air dans le tube externe. L'air présent dans le tube externe est en contact avec le tube de distribution de vapeur, ce qui permet de le réchauffer lorsque de la vapeur est injectée dans ledit tube de distribution.

Lorsque de la vapeur est injectée dans le tube de distribution, celle-ci est véhiculée sous pression jusqu'à la chambre de diffusion. Concomitamment, lorsque l'extrémité du tube externe et la tête de la buse sont plongées dans un liquide contenu dans un récipient, les moyens d'aspiration aspirent - sous l'effet venturi généré par la vapeur pénétrant dans la chambre de diffusion - l'air réchauffé qui transite par le tube externe, d'une part, et le liquide contenu dans le récipient, d'autre part. La vapeur, l'air réchauffé et le liquide se mélangent ainsi dans la chambre de diffusion, ce qui permet de créer une mousse qui est extraite par la sortie de buse sous l'action de la pression de la vapeur injectée dans le tube de distribution de vapeur.

Le dispositif de moussage selon la présente invention comprend des caractéristiques identiques à celles citées précédemment et connues de l'art antérieur. La présente invention vise cependant à autoriser une latitude de remontage du dispositif de moussage après chaque nettoyage, en particulier de la buse, sans altérer le bon fonctionnement dudit dispositif, ce que ne permettent pas les dispositifs de moussage de l'art antérieur. En effet, ceux-ci présentent pour inconvénient de nécessiter un vissage entre la buse et le tube de distribution de vapeur à un couple de serrage bien précis, notamment au moyen d'un outil spécial de type clef dynamométrique, en sorte de garantir une étanchéité au niveau de la zone d'accouplement par vissage entre ladite buse et ledit tube de distribution et, ainsi, garantir une bonne maîtrise des flux et débits de vapeur, d'air et de liquide et, donc, une qualité du moussage du liquide après chaque remontage dudit dispositif.

A cet effet, outre les caractéristiques précitées, le dispositif de moussage selon l'invention comprend des premiers moyens d'étanchéité et de positionnement configurés entre la partie aval et le corps tubulaire pour permettre une tolérance de positionnement entre le tube de distribution de vapeur et la buse, sans perte d'injection de vapeur dans la buse, lors du vissage entre ces deux éléments. Cette conception selon l'invention supprime la nécessité de devoir visser la buse avec le tube de distribution de vapeur à un couple de serrage bien déterminé afin de positionner convenablement ces éléments et d'obtenir une parfaite étanchéité entre eux dans la zone d'accouplement par vissage.

Dans un mode de réalisation du dispositif de moussage selon l'invention, les premiers moyens d'étanchéité et de positionnement sont constitués d'un premier joint, de préférence un joint à lèvres. On pourrait toutefois prévoir d'autres joints, par exemple des joints toriques, voir d'autres types de premiers moyens d'étanchéité, par exemple une bague d'étanchéité.

Dans un mode de réalisation du dispositif de moussage selon l'invention, la partie aval du tube de distribution de vapeur est configurée pour être insérée dans le tube externe et comprend une portion d'extrémité munie d'un filetage. En outre, la buse comprend un conduit composé de quatre portions successives. La première portion du conduit est disposée en amont du corps tubulaire de ladite buse et est configurée pour préserver un espacement entre ledit conduit et la partie aval, permettant l'introduction d'air dans ledit espacement. La seconde portion du conduit est disposée plus ou moins au centre du corps tubulaire et est munie d'un taraudage configuré pour visser ladite portion d'extrémité. La troisième portion du conduit est disposée en aval du corps tubulaire et est configurée pour former un goulot d'étranglement. La quatrième portion du conduit constitue la chambre de diffusion sur la tête de la buse.

En outre, le premier joint est agencé entre la première portion du conduit et la partie aval. Ainsi, l'air positionné dans l'espacement reste bloqué au niveau du premier joint et ne peut donc pas pénétrer dans la seconde portion du conduit et, par conséquent, dans la troisième portion du conduit malgré la présence éventuelle de fuites dans la zone d'accouplement par vissage située dans cette seconde portion, étant donné la tolérance de serrage lors du vissage accordée à chaque remontage du dispositif de moussage. Inversement, cela empêche un échappement de vapeur dans l'espacement du fait de la présence éventuelle desdites fuites.

De manière préférentielle, selon ce mode de réalisation, la première portion comporte une partie d'entrée configurée pour faciliter l'introduction du premier joint lors du vissage. Diverses conceptions de cette première partie sont envisageables, par exemple une partie d'entrée conique. On pourrait tout de même prévoir cette première portion de forme cylindrique sur toute sa longueur sans sortir du cadre de l'invention, ce qui générerait un peu plus de difficultés pour insérer le tube de distribution dans la buse.

De manière préférentielle, selon ce mode de réalisation, les moyens d'aspiration comprennent un premier trou qui débouche sur le contour externe de la buse d'une part, et dans la chambre de diffusion d'autre part, ce qui permet au premier trou d'être en contact avec le liquide lorsque la tête est plongée dans celui-ci. Ces moyens d'aspiration comprennent également un second trou qui débouche sur le contour externe de la buse d'une part, et dans la première portion du conduit, au-dessus du premier joint d'autre part, de manière à être positionné dans l'espacement et à pouvoir aspirer l'air contenu dans le tube externe. En outre, ces moyens d'aspiration comprennent une rainure qui est agencée longitudinalement sur le contour externe de la buse et configurée pour communiquer avec le premier trou d'une part, et avec le second trou d'autre part. Cela permet de constituer un conduit d'aspiration.

Selon ce mode de réalisation, les moyens de vissage sont configurés pour garantir un maintien du second trou débouchant au-dessus du premier joint lors de l'assemblage de la buse et du tube de distribution de vapeur. Cela contribue également à faciliter le remontage du dispositif de moussage après nettoyage, sans risque de nuisance au bon fonctionnement des flux et débit d'air.

De préférence, selon ce mode de réalisation, la partie aval comprend sur son contour externe une première gorge configurée pour réceptionner le premier joint. Cela assure une mise en place convenable du premier joint sur la partie aval du tube de distribution de vapeur, garantissant le bon fonctionnement du dispositif de moussage lors de chaque remontage. Cela facilite également le maintien en position du premier joint durant l'insertion et le vissage du tube de distribution de vapeur dans la buse.

Selon l'invention, le dispositif de moussage comprend des seconds moyens d'étanchéité et de positionnement configurés entre le tube externe et le corps tubulaire pour permettre un centrage de la buse par rapport au tube externe. Ainsi, le positionnement de la rainure est toujours identique lors de chaque remontage du dispositif de moussage et un débit identique d'air aspiré est assuré. On garantit ainsi une reproduction homogène de la mousse dans le temps, malgré le démontage et le remontage du dispositif de moussage.

De préférence, ces seconds moyens d'étanchéité et de positionnement sont constitués d'un second joint, par exemple un joint à lèvre. On pourrait prévoir des variantes, de manière comparable au premier joint.

De préférence, le corps tubulaire de la buse comprend sur son contour externe une seconde gorge qui est configurée pour réceptionner le second joint. Cela permet un positionnement convenable du second joint sur la buse et son maintien en position durant l'insertion du corps tubulaire dans le tube externe.

Dans une conception associant le mode de réalisation des moyens d'aspiration décrits précédemment et les seconds moyens d'étanchéité, le second joint est positionné au-dessus du second trou, ce qui évite toute interférence de ce second joint sur les moyens d'aspiration.

L'invention concerne également une machine pour la préparation de boissons, laquelle est équipée d'un dispositif de moussage présentant l'une quelconque des caractéristiques précitées, voire toute autre variante rentrant dans le cadre de cette invention. Cette machine comprend un système de production de vapeur configuré pour être raccordé à une partie amont du tube de distribution de vapeur.

Dans une réalisation de l'invention, cette machine est configurée pour préparer une boisson à base de café et pour permettre le moussage de lait.

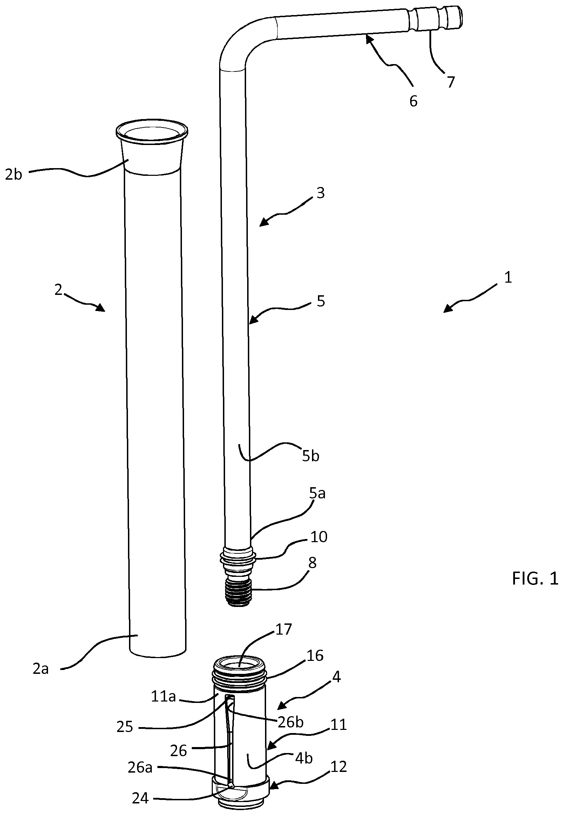

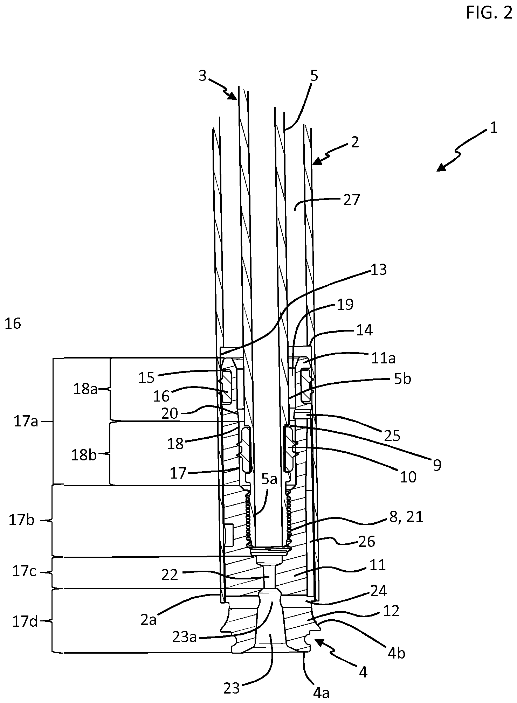

La description qui suit met en évidence les caractéristiques et avantages de la présente invention selon un mode réalisation. Cette description s'appuie sur des figures parmi lesquelles :
- La figure 1 illustre une vue éclatée des composants essentiels du dispositif de moussage ;
- La figure 2 illustre une vue partielle en coupe du dispositif de moussage de la figure 1, montrant les composants assemblés entre eux.
Tel qu'illustré sur les figures 1 et 2, le dispositif de moussage 1 comprend un tube externe 2, un tube de distribution 3 de vapeur et une buse 4. Le tube externe 2 comprend une extrémité inférieure 2a et une extrémité supérieure 2b légèrement évasée pour faciliter l'introduction du tube de distribution 3, lequel comprend une partie aval 5 qui est insérée dans le tube externe 2 et une partie amont 6 munie à son extrémité d'un embout 7 de raccordement à un système de production de vapeur d'une machine pour la préparation de boissons (non illustrée). L'extrémité 5a de la partie aval 5 comprend un filetage 8. Juste au-dessus de ce filetage 8 et sur le contour externe 5b de la partie aval 5, est agencée une première gorge 9 qui reçoit un premier joint 10, de préférence un joint à double lèvre.

Tel qu'illustré sur les figures 1 et 2, la buse 4 comprend un corps tubulaire 11 et une tête 12. Le corps tubulaire 11 est inséré dans l'extrémité inférieure 2a du tube externe 2. La partie inférieure interne de la buse 4 comporte un alésage 13, illustré en figure 2, et le diamètre externe du corps tubulaire 11 est calibré pour permettre un emboîtement ajusté dudit corps tubulaire 11 dans cet alésage 13. Un épaulement 14 dans le fond de cet alésage 13 permet de constituer une butée d'arrêt qui limite l'enfoncement de la buse 4 dans le tube externe 2. Le corps tubulaire 11 comprend à son extrémité supérieure 11a, sur le contour externe 4b de la buse 4, une seconde gorge 15 qui reçoit un second joint 16, de préférence un joint à double lèvre, permettant d'assurer une étanchéité entre le fond de cet alésage 13 et cette extrémité supérieure 11a.

La buse 4 comprend un conduit 17 qui se décompose en quatre portions successives 17a, 17b, 17c, 17d, tel qu'illustré sur les figures 1 et 2. La première portion 17a est positionnée en amont du corps tubulaire 11 et est constituée d'un alésage 18 de diamètre supérieur à celui du contour externe 5b de la partie aval 5 du tube de distribution 3, ce qui permet de maintenir un espacement 19 entre la partie aval 5 et la première portion 17a, tel qu'illustré sur la figure 2. Cet alésage 18 comprend une partie d'entrée 18a et une partie de logement 18b. La partie d'entrée 18a est constituée d'un alésage cylindrique de diamètre légèrement supérieur au diamètre de l'alésage cylindrique de la partie de logement 18b, et un chanfrein 20 relie ces deux parties 18a, 18b tel qu'illustré en figure 2. Dans une variante, la partie d'entrée 18a peut être constituée d'un alésage légèrement conique prolongé par l'alésage cylindrique de la partie de logement 18b. Dans ces deux cas, la partie d'entrée 18a facilite l'introduction du premier joint 10 qui vient ensuite se positionner dans la partie de logement 18b en sorte d'assurer une étanchéité entre la partie aval 5 du tube de distribution 3 et la première portion 17a de la buse 4.

La seconde portion 17b du conduit 17 est positionnée sensiblement au centre du corps tubulaire 11 et comporte un taraudage 21 sur lequel vient se visser le filetage 8 agencé sur la partie aval 5 du tube de distribution 3. La longueur du taraudage 21, la position de la première gorge 9 recevant le premier joint 10 sur le tube de distribution 3 et la longueur de la partie de logement 18b sur la première portion 17a du conduit 17 sont adaptées pour accepter une tolérance de vissage qui garantit le positionnement du premier joint 10 dans cette partie de logement 18b lorsque le filetage 8 atteint la fin du filet du taraudage 21. Quel que soit le serrage réalisé en fin de filet lors du vissage, l'étanchéité est assurée entre le tube de distribution de vapeur 3 et la buse 4 grâce au premier joint 10. Il n'est donc pas nécessaire d'effectuer un vissage à un couple de serrage bien déterminé pour garantir une étanchéité.

La troisième portion 17c est disposée en aval du corps tubulaire 11 et est configurée pour former un goulot d'étranglement 22 permettant d'augmenter la pression de la vapeur avant de pénétrer dans la quatrième portion 17d, laquelle est disposée dans la tête 12 de la buse 4 et est constituée d'une chambre de diffusion 23 qui permet d'effectuer le mélange de la vapeur sous pression, de l'air et du liquide en sorte de constituer de la mousse. Cette chambre de diffusion 23 débouche en sortie 4a de la buse 4, tel qu'illustré en figure 2.

Tel qu'illustré sur les figures 1 et 2, la buse 4 comprend un premier trou 24 qui est agencé radialement et qui débouche dans la partie supérieure 23a de la chambre de diffusion 23, juste en dessous du goulot d'étranglement 22 d'une part, et sur le contour externe 4b de la buse d'autre part. La buse comprend un second trou 25 qui est agencé radialement et qui débouche dans l'espacement 19 entre la partie aval 5 et le conduit 17 d'une part, et sur le contour externe 4b de la buse 4 d'autre part. Ce second trou 25 est positionné en dessous de la seconde gorge 15 qui reçoit le second joint 16, et au niveau de la jonction entre les deux parties 18a, 18b de la première portion 17a du conduit 17. Ce second trou 25 est, en outre, positionné à l'intérieur de l'alésage 13 du tube externe 2 lorsque la buse 4 est insérée dans ledit tube externe 2.

Cette buse 4 comprend également une rainure 26 qui s'étend longitudinalement sur son contour externe 4b, tel qu'illustré sur les figures 1 et 2. L'extrémité inférieure 26a de la rainure 26 communique avec le premier trou 24 et son extrémité supérieure 26b communique avec le second trou 25. Cette rainure 26 est disposée en contact de l'alésage 13 sur le tube externe 2 et constitue ainsi un conduit d'aspiration entre le premier trou 24 et le second trou 25.

La présence du second joint 16 permet d'assurer un centrage de la buse 4 dans l'alésage 13 du tube externe 2, ce qui permet d'assurer un positionnement identique de la rainure 26 vis-à-vis de cet alésage 13, lors de chaque remontage du dispositif de moussage 1. Ainsi, la section dudit conduit d'aspiration est identique lors de chaque remontage, ce qui garantit un même débit d'air lors de chaque aspiration.

La longueur et la position du taraudage 21 sur le conduit 17, la position de la première gorge 9 sur la partie aval 5 du tube de distribution 3 et la position du second trou 25 sur la buse 4 sont adaptées pour garantir un positionnement du premier joint 10 en dessous du second trou 25 pour ne pas obstruer le passage de l'air dans ce second trou 25. De même, la longueur de l'alésage 13 sur le tube externe 2 et la longueur de la buse 4, ainsi que la position du premier trou 24 sur cette buse 4 sont adaptées pour garantir un maintien dudit premier trou 24 au niveau de l'extrémité inférieure 2a du tube externe 2, partiellement à l'extérieur, en sorte d'aspirer convenablement le liquide.

Lors d'une projection de vapeur dans le tube de distribution 3, au moyen du système de production de vapeur sur la machine pour la préparation de boisson (non illustrée), celle-ci sort de l'extrémité 5a de la partie aval 5 dudit tube et débouche directement dans le goulot d'étranglement 22. La vapeur pénètre alors sous pression dans la chambre de diffusion 23, ce qui génère par le biais du premier trou 24 un effet venturi permettant d'aspirer l'air présent dans la chambre 27 du tube externe 2 par le biais de la rainure 26 et du second trou 25. Cette chambre 27 débouche à l'extrémité inférieure 2a du tube externe 2, sur le milieu ambiant. Sous l'effet de la dépression dans cette chambre 27, l'air du milieu ambiant pénètre et transite à l'intérieur de celle-ci où il est réchauffé du fait de la présence de vapeur qui circule dans le tube de distribution 3, assurant un transfert thermique. Cet air réchauffé circule ensuite successivement, sous l'effet venturi, dans l'espacement 19, dans le second trou 25, dans la rainure 26, dans le premier trou 24 puis pénètre dans la chambre de diffusion 23. Concomitamment, lorsque l'extrémité inférieure 2a du tube externe 2 est plongée dans un récipient contenant du liquide, le premier trou 24 est également plongé dans ce liquide, ce qui permet d'aspirer concomitamment du liquide en provenance du récipient et de l'air en provenance de la chambre 27. L'ensemble air/liquide pénètre donc dans la chambre de diffusion 23 et se mélange à la vapeur sous pression, permettant de créer une mousse qui est ensuite éjectée hors de cette buse 4, dans le récipient.

Durant la projection de vapeur dans le tube de distribution de vapeur 3, le premier joint 10 assure une parfaite étanchéité évitant toute remontée de vapeur dans l'espacement 19, quel que soit le niveau d'étanchéité dans la zone d'accouplement entre le filetage 8 et le taraudage 21, qui dépend notamment du couple de serrage réalisé lors du remontage entre la buse 4 et le tube de distribution 3. La vapeur est donc parfaitement canalisée jusqu'au goulot d'étranglement 22. En outre, l'air présent dans la chambre 27 est parfaitement canalisé dans le conduit d'aspiration constitué du premier trou 24, de la rainure 26 et du second trou 25 durant l'aspiration, sans risque de fuite d'air sur le contour externe 4b de la buse 4. Ainsi, quel que soit le couple de serrage lors du vissage du tube de distribution 3 sur la buse 4 pour le remontage du dispositif de moussage 1, on garantit une maîtrise de la qualité de la mousse et une reproduction de cette même qualité de mousse.

Des variantes de réalisation sont envisageables sans sortir du cadre de l'invention, notamment quant à la forme du tube de distribution 3 de vapeur, du tube externe 2 et de la buse 4, et quant à la mise en oeuvre des moyens d'aspiration de l'air contenu dans le tube externe et du liquide contenu dans le récipient, pour leur acheminement jusque dans la chambre de diffusion. On peut également prévoir des variantes de position des moyens d'étanchéité entre la buse 4 et le tube de distribution 3 et entre la buse 4 et le tube externe 2, selon la configuration desdits éléments. On peut également prévoir des variantes de moyens d'étanchéité, tels que des joints à simple lèvre, des joints toriques ou des bagues d'étanchéité.

Le dispositif de moussage 1 selon l'invention est mis en oeuvre sur une machine pour la préparation de boissons qui comprend notamment un système de production de vapeur raccordé à l'embout 7 sur la partie amont 6 du tube de distribution 3. Les caractéristiques d'une telle machine sont connues de l'homme du métier.

Dans une application préférentielle, cette machine est conçue pour la préparation de boissons à base de café et le liquide à faire mousser est du lait.

D'autres caractéristiques sont envisageables sans sortir du cadre de la présente invention.

## Revendications

1. Dispositif de moussage (1) d'une machine pour la préparation de boissons, lequel comprend :
- un tube externe (2),
- un tube de distribution (3) de vapeur qui comporte une partie aval (5),
- une buse (4) qui comprend un corps tubulaire (11) configuré pour être inséré dans le tube externe et une tête (12) munie d'une chambre de diffusion (23) qui communique avec le corps tubulaire et débouche en sortie (4a) de ladite tête,
- des moyens de vissage (8, 21) agencés entre la partie aval et le corps tubulaire et configurés pour assembler la buse avec le tube de distribution (3),
- des moyens d'aspiration (24, 25, 26) configurés pour aspirer dans la chambre de diffusion, par effet venturi, de l'air provenant d'une chambre (27) agencée à l'intérieur du tube externe (2) et un liquide lors d'une injection de vapeur dans la buse (4) et lorsque une extrémité inférieure (2a) du tube externe est plongée dans ce liquide,
**caractérisé en ce que** le dispositif de moussage comprend des premiers moyens d'étanchéité et de positionnement (10) configurés entre la partie aval du tube de distribution (5) et le corps tubulaire (11) pour permettre une tolérance de positionnement entre le tube de distribution de vapeur et la buse, sans perte d'injection de vapeur dans la buse, lors du vissage entre ces deux éléments.

2. Dispositif de moussage (1) selon la revendication 1, dans lequel les premiers moyens d'étanchéité et de positionnement sont constitués d'un premier joint (10).

3. Dispositif de moussage (1) selon la revendication 2, dans lequel le premier joint (10) est un joint à lèvres.

4. Dispositif de moussage (1) selon la revendication 3, dans lequel :
- la partie aval (5) est configurée pour être insérée dans le tube externe (2) et comprend une extrémité (5a) munie d'un filetage (8),
- la buse (4) comprend un conduit (17) composé de quatre portions successives, la première portion (17a) étant disposée en amont du corps tubulaire (11) et configurée pour préserver un espacement (19) entre ledit conduit et la partie aval (5), et la seconde portion (17b) étant disposée au centre du corps tubulaire et munie d'un taraudage (21) configuré pour visser l'extrémité (5a).

5. Dispositif de moussage (1) selon la revendication 4, dans lequel le premier joint (10) est agencé entre la première portion (17a) de conduit et la partie aval (5).

6. Dispositif de moussage (1) selon l'une des revendications 4 ou 5, dans lequel la première portion (17a) comporte une partie d'entrée (18a) configurée pour faciliter l'introduction du premier joint (10) lors du vissage.

7. Dispositif de moussage selon l'une des revendications 4 à 6, dans lequel les moyens d'aspiration comprennent :
- un premier trou (24) débouchant d'une part sur le contour externe (4b) de la buse (4) et d'autre part dans la chambre de diffusion (23),
- un second trou (25) débouchant d'une part sur le contour externe (4b) de la buse et d'autre part dans la première portion (17a) du conduit (17), au-dessus du premier joint (10), et
- une rainure (26) agencée longitudinalement sur le contour externe (4b) de la buse et configurée pour communiquer d'une part avec le premier trou (24) et d'autre part avec le second trou (25).

8. Dispositif de moussage (1) selon la revendication 7, dans lequel les moyens de vissage (8, 21) sont configurés pour garantir un maintien du second trou (25) au-dessus du premier joint (10) lors de l'assemblage de la buse (4) et du tube de distribution (3).

9. Dispositif de moussage (1) selon l'une des revendications 2 à 8, dans lequel la partie aval (5) comprend sur son contour externe (5b) une première gorge (9) configurée pour réceptionner le premier joint (10).

10. Dispositif de moussage (1) selon l'une quelconque des revendications 1 à 9, lequel comprend des seconds moyens d'étanchéité et de positionnement (16) configurés entre le tube externe (2) et le corps tubulaire (11).

11. Dispositif de moussage (1) selon la revendication 10, dans lequel les seconds moyens d'étanchéité et de positionnement sont constitués d'un second joint (16).

12. Dispositif de moussage (1) selon la revendication 11, dans lequel le corps tubulaire (11) comprend sur son contour externe une seconde gorge (15) configurée pour réceptionner le second joint (16).

13. Dispositif de moussage (1) selon l'une des revendications 11 ou 12 rattachée à la revendication 7, dans lequel le second joint (16) est positionné au-dessus du second trou (25).

14. Machine pour la préparation de boissons, laquelle est équipée d'un dispositif de moussage (1) selon l'une quelconque des revendications 1 à 13 et comprend un système de production de vapeur configuré pour être raccordé à une partie amont (6) du tube de distribution (3).

15. Machine selon la revendication 14, laquelle est configurée pour préparer une boisson à base de café et pour permettre le moussage de lait.

## Patentansprüche

1. Schäumvorrichtung (1) einer Maschine zur Zubereitung von Getränken, wobei sie umfasst:
- ein äußeres Rohr (2),
- ein Rohr zur Verteilung von Dampf (3), das einen stromabwärts gelegenen Teil (5) aufweist,
- eine Düse (4), die einen rohrförmigen Körper (11), der konfiguriert ist, um in das äußere Rohr eingeführt zu werden, und einen Kopf (12) umfasst, der mit einer Diffusionskammer (23) versehen ist, die mit dem rohrförmigen Körper verbunden ist und am Auslass (4a) des Kopfes mündet,
- Schraubmittel (8, 21), die zwischen dem stromabwärtigen Teil und dem rohrförmigen Körper angeordnet und konfiguriert sind, um die Düse an dem Rohr zur Verteilung (3) anzubringen,
- Saugmittel (24, 25, 26), die konfiguriert sind, um in der Diffusionskammer durch den Venturi-Effekt Luft, die aus einer Kammer (27) kommt, die innerhalb des äußeren Rohrs (2) angeordnet ist, und eine Flüssigkeit während einer Dampfinjektion in die Düse (4), und während ein unteres Ende (2a) des äußeren Rohrs in diese Flüssigkeit eingetaucht ist, anzusaugen,
**dadurch gekennzeichnet, dass** die Schäumvorrichtung erste Dichtungs- und Positionierungsmittel (10) umfasst, die zwischen dem stromabwärtigen Teil des Rohrs zur Verteilung (5) und dem rohrförmigen Körper (11) konfiguriert sind, um eine Positionierungstoleranz zwischen dem Rohr zur Verteilung von Dampf und der Düse ohne einen Verlust der Injektion von Dampf in die Düse während des Schraubens zwischen diesen beiden Elementen zu ermöglichen.

2. Schäumvorrichtung (1) nach Anspruch 1, wobei die ersten Dichtungs- und Positioniermittel aus einer ersten Dichtung (10) bestehen.

3. Schäumvorrichtung (1) nach Anspruch 2, wobei die erste Dichtung (10) eine Lippendichtung ist.

4. Schäumvorrichtung (1) nach Anspruch 3, wobei:
- der stromabwärtige Teil (5) konfiguriert ist, um in das äußere Rohr (2) eingeführt zu werden, und ein Ende (5a) aufweist, das mit einem Gewinde (8) versehen ist;
- die Düse (4) eine Leitung (17) umfasst, die aus vier aufeinanderfolgenden Abschnitten besteht, wobei der erste Abschnitt (17a) stromaufwärts des rohrförmigen Körpers (11) angeordnet ist und konfiguriert ist, um einen Abstand (19) zwischen der Leitung und dem stromabwärtigen Abschnitt (5) zu bewahren, und wobei der zweite Abschnitt (17b) in der Mitte des rohrförmigen Körpers angeordnet ist und mit einem Innengewinde (21) versehen ist, das konfiguriert ist, um das Ende (5a) anzuschrauben.

5. Schäumvorrichtung (1) nach Anspruch 4, wobei die erste Dichtung (10) zwischen dem ersten Abschnitt (17a) der Leitung und dem stromabwärtigen Teil (5) angeordnet ist.

6. Schäumvorrichtung (1) nach einem der Ansprüche 4 oder 5, wobei der erste Abschnitt (17a) einen Einlassteil (18a) aufweist, der konfiguriert ist, um das Einführen der ersten Dichtung (10) während des Schraubens zu erleichtern.

7. Schäumvorrichtung nach einem der Ansprüche 4 bis 6, wobei die Saugmittel umfassen:
- ein erstes Loch (24), das auf einer Seite an der Außenkontur (4b) der Düse (4) und auf der anderen Seite in der Diffusionskammer (23) mündet,
- ein zweites Loch (25), das auf einer Seite an der Außenkontur (4b) der Düse und auf der anderen Seite in dem ersten Abschnitt (17a) der Leitung (17) oberhalb der ersten Dichtung (10) mündet, und
- einer Rille (26), die in Längsrichtung an der Außenkontur (4b) der Düse angeordnet und konfiguriert ist, auf einer Seite mit der ersten Öffnung (24) und auf der anderen Seite mit dem zweiten Loch (25) verbunden zu sein.

8. Schäumvorrichtung (1) nach Anspruch 7, wobei die Schraubmittel (8, 21) konfiguriert sind, UM ein Halten des zweiten Lochs (25) über der ersten Dichtung (10) während des Zusammenbaus der Düse (4) und des Rohrs zur Verteilung (3) zu gewährleisten.

9. Schäumvorrichtung (1) nach einem der Ansprüche 2 bis 8, wobei der stromabwärtige Teil (5) an seiner Außenkontur (5b) eine erste Ausnehmung (9) aufweist, die zur Aufnahme der ersten Dichtung (10) konfiguriert ist.

10. Schäumvorrichtung (1) nach einem der Ansprüche 1 bis 9, wobei sie zweite Dichtungs- und Positionierungsmittel (16) umfasst, die zwischen dem äußeren Rohr (2) und dem rohrförmigen Körper (11) angeordnet sind.

11. Schäumvorrichtung (1) nach Anspruch 10, wobei die zweiten Dichtungs- und Positioniermittel aus einer zweiten Dichtung (16) bestehen.

12. Schäumvorrichtung (1) nach Anspruch 11, wobei der rohrförmige Körper (11) an seiner Außenkontur eine zweite Ausnehmung (15) umfasst, die zur Aufnahme der zweiten Dichtung (16) konfiguriert ist.

13. Schäumvorrichtung (1) nach einem der Ansprüche 11 oder 12, abhängig von Anspruch 7, wobei die zweite Dichtung (16) über dem zweiten Loch (25) positioniert ist.

14. Maschine zur Zubereitung von Getränken, die mit einer Schäumvorrichtung (1) nach einem der Ansprüche 1 bis 13 ausgestattet ist und ein Dampferzeugungssystem umfasst, das konfiguriert ist, um an einem stromaufwärtigen Abschnitt (6) des Rohrs zur Verteilung (3) angeschlossen zu werden.

15. Maschine nach Anspruch 14, die konfiguriert ist, um ein Getränk auf Basis von Kaffee zuzubereiten und ein Schäumen von Milch zu ermöglichen.

## Claims

1. Foaming device (1) of a machine for the preparation of beverages comprising:
- an external tube (2),
- a steam distribution tube (3) comprising a downstream section (5),
- a nozzle (4) that comprises a tubular body (11) configured to be inserted in an external tube and a head (12) fitted with a diffusion chamber (23) communicating with the tubular body and leading to an outlet (4a) of said head,
- screwing means (8, 21) arranged between the downstream section and the tubular body, and configured for the assembly of the nozzle and the distribution tube (3),
- distribution means (24, 25, 26) configured to suction into the diffusion chamber, by Venturi effect, air from a chamber (27) arranged inside the external tube (2) and a liquid during the injection of steam in the nozzle (4) when a lower end (2a) of the external tube is immersed in the liquid,
**characterised in that** the foaming device comprises first sealing and positioning means (10) configured between the downstream section of the distribution tube (5) and the tubular body (11) to allow a positioning clearance between the steam distribution tube and the nozzle, without loss of injection of steam in the nozzle when these two elements are screwed to one another.

2. Foaming device (1) according to claim 1, wherein the first sealing and positioning means are made of a first seal (10).

3. Foaming device (1) according to claim 2, wherein the first seal (10) is a radial shaft seal.

4. Foaming device (1) according to claim 3, wherein:
- the downstream section (5) is configured to be inserted on the outer tube (2) and includes an end (5a) featuring a threading (8),
- the nozzle (4) comprises a duct (17) made of four successive portions, the first portion (17a) being arranged upstream from the tubular body (11) and configured to maintain a gap (19) between said duct and the downstream section (5), and the second portion (17b) being arranged at the centre of the tubular body and featuring a tapping (21) configured for the screwing of the end (5a).

5. Foaming device (1) according to claim 4, wherein the first seal (10) is arranged between the first portion (17a) of the duct and the downstream section (5).

6. Foaming device (1) according to any one of the claims 4 or 5, wherein the first portion (17a) comprises an inlet part (18a) configured to facilitate the insertion of the first seal (10) during screwing.

7. Foaming device according to any one of the claims 4 to 6, wherein the suction means comprise:
- a first hole (24) leading on one hand to the outer circumference (4b) of the nozzle (4), and on the other hand to the diffusion chamber (23),
- a second hole (25) leading on one hand to the outer circumference (4b) of the nozzle, and on the other hand to first portion (17a) of the duct (17) above the first seal (10), and
- a groove (26) arranged longitudinally on the outer circumference (4b) of the nozzle and configured to communicate on one hand with the first hole (24), and on the other hand with the second hole (25).

8. Foaming device (1) according to claim 7, wherein the screwing means (8, 21) are configured to ensure that the second hole (25) is maintained on top of the first seal (10) when the nozzle (4) and the distribution tube (3) are assembled.

9. Foaming device (1) according to any one of the claims 2 to 8, wherein the downstream section (5) comprises on its outer circumference (5b) a first channel (9) configured to receive the first seal (10).

10. Foaming device (1) according to any one of the claims 1 to 9, comprising second sealing and positioning means (16) configured between the outer tube (2) and the tubular body (11).

11. Foaming device (1) according to claim 10, wherein the second sealing and positioning means are made of a second seal (16).

12. Foaming device (1) according to claim 11, wherein the tubular body (11) comprises on its outer circumference a second channel (15) configured to receive the second seal (16).

13. Foaming device (1) according to any one of the claims 11 or 12, insofar that it relates to claim 7, wherein the second seal (16) is positioned on top of the second hole (25).

14. Machine for preparing beverages, comprising a foaming device (1) according to any one of the claims 1 to 13 and also comprising a steam production unit configured to be connected to an upstream section (6) of the distribution tube (3).

15. Device according to claim 14, configured to prepare a coffee-based beverage and to generate milk foam.
